# EUROPEAN PATENT SPECIFICATION

(11) **EP 0 901 570 B1**
(45) Date of publication and mention of the grant of the patent: **22.12.1999**
(21) Application number: 97918918.0
(22) Date of filing: 10.09.1997
(51) Int. Cl.: F02F 3/00, F02F 3/28, F16J 1/00

(54) **A PISTON FOR AN INTERNAL COMBUSTION ENGINE, IN PARTICULAR A BIG MARINE DIESEL ENGINE**
KOLBEN FÜR VERBRENNUNGSMOTOR, INSBESONDERE SCHIFFSDIESELMOTOREN
PISTON POUR MOTEUR A COMBUSTION INTERNE, NOTAMMENT GROS MOTEUR DIESEL MARIN

(30) Priority: 30.09.1996 DK 106896
(43) Date of publication of application: 17.03.1999
(73) Proprietor: MAN B & W Diesel A/S, 2450 Copenhagen SV (DK)
(72) Inventor: CRONE, Erik, DK-2610 Rodovre (DK)
(74) Representative: Schoenning, Soeren
(86) International application number: DK9700383
(87) International publication number: WO9814697

(56) References cited:
- DK-C- 37 351
- US-A- 3 555 972
- US-A- 4 114 519
- US-A- 4 161 165
- US-A- 4 292 937

## Description

The present invention relates to a piston for an internal combustion engine, in particular a big marine diesel engine, and of the type which as power-transferring member between piston and piston rod has an annular rib integral with the piston head, in which in an annular area between the side wall of the piston, which is facing downwards from the piston head and which is provided with external piston rings, and the rib supporting elements are provided which end downwards in a conical wall which is penetrated by bores extending substantially in parallel with the axis of the piston, through which bores cooling oil may pass, and in which the conical wall, when viewed in axial section of the piston, is connected with the side wall by means of a rounded wall portion.

Pistons of this type are used in connection with slow-speed two-stroke crosshead diesel engines. Over the years it has been possible to increase the power output of these engines by increasing the effective mean pressure. This increase of the power output brings about a corresponding load on the piston head and consequently on the parts of the piston which are to transfer the load to the piston rod. As the load is to a very high degree dynamic, the supporting elements of the piston must be constructed with a view to withstanding formation of cracks. The higher load also makes big demands on the cooling of the piston, for which reason a strengthening of the piston cannot be done solely by increasing the wall thickness in the exposed places. A particularly exposed area is the transition between the side wall of the piston and the supporting elements transferring the forces from the exterior areas of the piston head to the power transferring rib.

The object of the present invention is to provide a piston of the type mentioned by way of introduction, in which the risk of fractures in the critical area has been reduced.

According to the invention this object is met by the piston being characterized by the subject matter of claim 1.

It has surprisingly turned out that a construction, in which the wall thickness of the side wall of the piston in the critical area has been reduced, results in smaller dynamic tensional loads on the piston. In practice the reduced wall thickness is made as an undercutting of the side wall in the area, in which the supporting elements with a rounding meet the side wall. The undercutting and the rounding entail a separation of the dynamically most heavily loaded areas of the construction, which, in spite of the fact that the absolute load is not reduced, results in a considerably reduced risk of fracture.

According to the invention the rounded wall portion is extended into the side wall portion with reduced wall thickness. By this design feature the radius of the rounding may be increased compared to the embodiments referred to in the introduction and the sensitivity towards dynamic load is reduced.

In order to separate the most heavily loaded sections in the critical area between the side wall of the piston and the conical wall the rounded portion seen in axial section of the piston has substantially the shape of a circle, the centre of which is positioned such that it is farther away from the axis of the piston than any part of the cooling bores.

According to the invention it is preferable that the angle between the conical wall and the piston axis is between 30 and 60°. With such an angle the cooling bores will obtain such an approximately elliptical intersection surface with the conical surface that a suitable distance between the dynamically heavily loaded areas is optimally obtainable.

The arrangement according to the invention is in particular suited for pistons with a big top section, i.e. that the side wall portion, in which the piston rings are positioned, is close to the lower end of the side wall. According to the invention the area with reduced wall thickness of the side wall is placed closer to the piston head than the piston rings.

It is according to the invention preferred that the area of the side wall with reduced thickness extends from approx. 1/2 of the height of a piston ring above the uppermost piston ring to the rounded wall section.

The area with reduced wall thickness is made in a simple way by turning, if the area with reduced thickness is defined by the rounded wall portion and a conical surface, the angle between the axis of the piston and the guide of the conical surface being 5-25°.

The invention will now be described in detail in the following with reference to the drawing, in which
Fig. 1 is a half axial section through a first embodiment of a top section for a piston according to the invention, and
Fig. 2 is a half axial section through a second embodiment of a top section for a piston according to the invention.

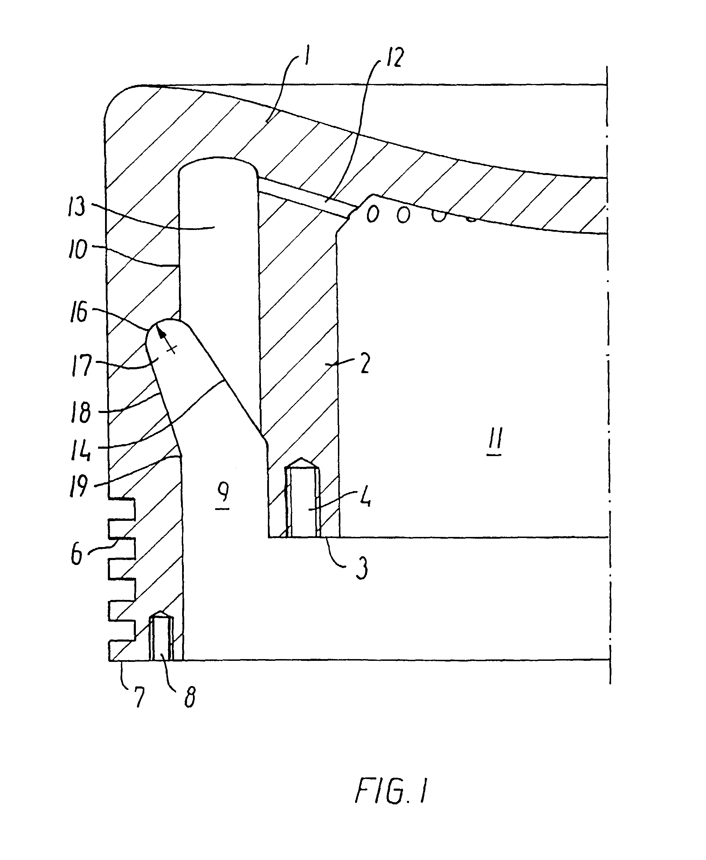

The piston top section shown in Fig. 1 comprises a piston head 1 which is integral with a downwards facing annular rib 2, which at its downwards facing end surface 3 is adapted to be fastened to a flange on a piston rod by means of a number of bolts which is inserted in the holes 4. The rib 2 thus serves the purpose of transferring the forces acting on the piston head to the piston rod. Integral with the piston head 1 is, moreover, a downwards facing side wall 5, which on part of its height is provided with a number of grooves 6 for receiving piston rings. At the lower end surface 7 of the side wall 5 a number of threaded bolt holes 8 is provided, said holes serving the purpose of fastening a bottom part which constitutes the underside of the piston and which at the bottom closes the interior hollow space of the piston. In the area between the side wall 5 and the ring wall 2 a circumferential interspace 9 is provided, which at the top is lengthened by means of a circle of bores 10. The bores 10 are connected with the interspace 11 within the ring wall 2 by means of ducts 12. Through the ducts 12 cooling oil, which through a duct in the piston rod is conveyed up into the central hollow space 11, may be injected through the ducts 12 into the bores 10, from where the oil through the interspace 9 is conveyed to a return duct in the piston rod.

Between the bores 10 walls 13 are provided which serve as supporting elements between the side wall 5 and the annular rib 2. The walls 13 end at the bottom in a conical wall 14, which in a soft rounding 15 joins the annular rib 2. At the upper end the conical wall joins the side wall 5 by means of a rounding 16 which constitutes the upper delimitation of a portion 17 of the side wall 5 with reduced thickness. At the bottom the portion 17 is defined by a conical wall 18. The rounding 15 has preferably, when viewed axially, a circular profile with a radius of between 5 and 24 mm depending on the diameter of the piston. The centre of the circle is preferably placed on or outside of the extension of the guide for the bore 10 placed farthest away from the piston axis. The area of the side wall 5 with reduced wall thickness serves the purpose of removing the dynamically most heavily loaded areas in the transition between the conical wall 14 and in the transition between the walls 13 and the conical wall 14. Though the side wall 5 is weakened in the area with reduced wall thickness, such a reduction of the dynamic load is obtained that the risk of fracture in the critical area is minimized, partly through an increased flexibility of the construction, partly through a more appropriate positioning of the most heavily loaded areas relative to one another. The embodiment according to the invention is in particular suited for pistons with a big top section, i.e. where the piston rings are placed far away from the piston head 1. It is preferred that the transition 19 between the portion with reduced wall thickness and the remaining part of the side wall with the piston rings are placed approx. 1/2 ring height above the upper piston ring groove 6. The angle between the piston axis and the conical wall 18 is preferably 5 to 25°. The angle between the conical wall 14 and the piston axis is normally between 30 and 60°.

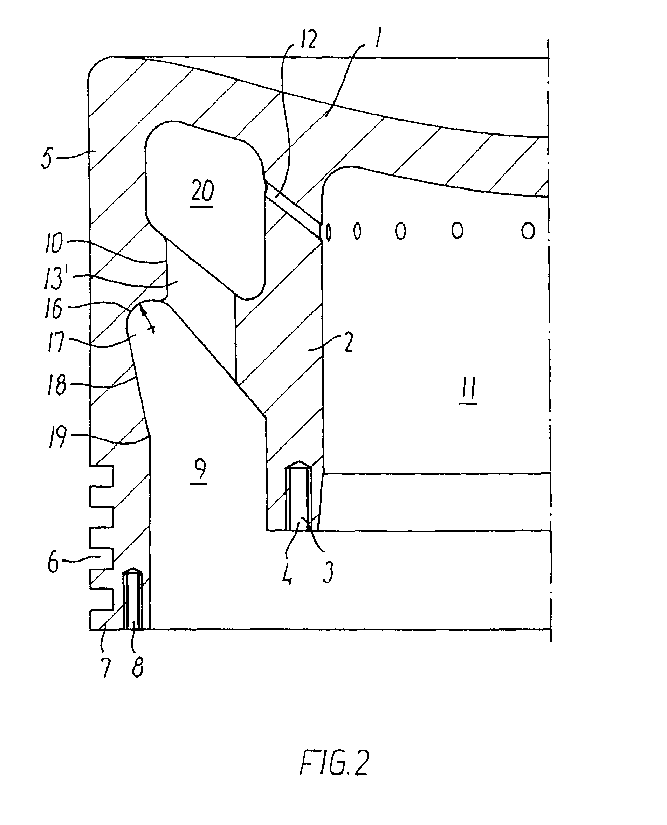

Fig. 2 shows another type of piston, in which the bores 10 have been replaced by a circumferential hollow space 20. The hollow space 20 is defined by a support) ing wall 13', which at the bottom has a conical wall 14. The supporting wall 13' is provided with spaced bores 10, through which cooling oil, which through the ducts 12 flows into the hollow space 20, may be returned to the return duct in the piston rod.

The piston shown in Fig. 2 is like the piston according to Fig. 1 provided with a portion 17 of the side wall 5 with reduced thickness. In Fig. 2 the same reference numerals as in Fig. 1 are used for analogous parts, and these parts need no further description. This portion is in the same way defined upwards by a rounding with substantially circular cross-section, when the piston is axially viewed, and with a centre for the radius of curvature positioned radially outside the extension of the, when radially viewed, outermost guide for the bore 13' and preferably on or outside the guide for the inner surface of the side wall 5. The dimensions for the portion with reduced wall thickness are besides as stated in connection with Fig. 1.

## Claims

1. A piston for an internal combustion engine, in particular a big marine diesel engine, and of the type which as a power-transferring member between piston and piston rod has an annular rib integral with the piston head and provided with rib supporting elements in an annular area between the rib and the piston's side wall, which is facing downwards from the piston head and which is provided with external piston rings, the rib supporting elements ending downwards in a conical wall, which for passage of cooling oil is penetrated by bores extending substantially in parallel with the axis of the piston, and which conical wall, when viewed in axial section of the piston, is connected with the side wall by means of a rounded wall portion, through which an axial section substantially has the shape of a circle, which rounded wall portion has an extension as known per se into a portion of the side wall with reduced wall thickness, and which extension enables the centre of said circle to be positioned such that it is radially farther away from the axis of the piston than any part of the cooling bores.

2. A piston according to claim 1,
**characterized** in that the area with reduced wall thickness of the side wall is placed closer to the head of the piston than the piston rings.

3. A piston according to claim 2,
**characterized** in that the area of the side wall with reduced thickness extends from approx. 1/2 the height of a piston ring above the uppermost piston ring to the rounded wall section.

## Patentansprüche

1. Kolben für einen Verbrennungsmotor, insbesondere einen Schiffsdieselmotor, des Typs, welcher als ein kraftübertragendes Element zwischen dem Kolben und der Kolbenstange eine ringförmige Rippe integral mit dem Kolbenkopf aufweist und welcher mit Rippen-Halteelementen in einem ringförmigen Bereich zwischen der Rippe und der Kolben-Seitenwand versehen ist, welche vom Kolbenkopf nach unten verläuft und welche mit äußeren Kolbenringen versehen ist, wobei die Rippen-Halteelemente nach unten hin in einer konischen Wand enden, welche zum Durchfluss von Kühlöl von Bohrungen durchsetzt ist, welche sich im wesentlichen parallel zur Kolbenachse erstrecken, wobei die konische Wand im axialen Schnitt des Kolbens mit der Seitenwand mittels eines abgerundeten Wandabschnitts verbunden ist, durch welchen ein axialer Schnitt im wesentlichen die Gestalt eines Kreises hat, und wobei der abgerundete Wandabschnitt in an sich bekannter Weise eine in einen eine reduzierte Wanddicke aufweisenden Abschnitt der Seitenwand hineinreichende Ausdehnung aufweist, welche es ermöglicht, dass der Mittelpunkt des Kreises so positionierbar ist, dass er radial von der Achse des Kolbens weiter weg ist als jeder Teil der Kühlbohrungen.

2. Kolben nach Anspruch 1, **dadurch gekennzeichnet, dass** der Bereich mit der reduzierten Wanddicke der Seitenwand näher am Kopf des Kolbens angeordnet ist als die Kolbenringe.

3. Kolben nach Anspruch 2, **dadurch gekennzeichnet, dass** der Bereich der Seitenwand mit verringerter Dicke sich von ungefähr einer halben Kolbenringhöhe über dem obersten Kolbenring zum abgerundeten Wandabschnitt erstreckt.

## Revendications

1. Piston pour un moteur à combustion interne, notamment un gros moteur Diesel marin, et du type comportant, en tant que pièce de transmission de puissance entre le piston et la tige de piston, une nervure annulaire faisant corps avec la tête du piston et présentant des éléments de support de nervure dans une zone annulaire entre la nervure et la paroi latérale du piston qui est tournée vers le bas à partir de la tête du piston, et qui est munie de segments extérieurs de piston, les éléments de support de nervure s'achevant, vers le bas, dans une paroi conique qui, en vue du passage d'une huile de refroidissement, est parcourue par des alésages s'étendant pour l'essentiel parallèlement à l'axe du piston, laquelle paroi conique, observée en coupe axiale du piston, est reliée à la paroi latérale au moyen d'une région de paroi arrondie à travers laquelle une coupe axiale revêt pour l'essentiel la forme d'un cercle, laquelle région de paroi arrondie comporte, d'une manière connue par elle-même, un prolongement vers une zone de la paroi latérale présentant une épaisseur de paroi réduite, lequel prolongement permet au centre dudit cercle d'être positionné de telle sorte qu'il soit davantage éloigné de l'axe du piston, dans le sens radial, qu'une quelconque partie des alésages de refroidissement.

2. Piston selon la revendication 1,
caractérisé par le fait que la zone de la paroi latérale, présentant une épaisseur de paroi réduite, est disposée plus près de la tête du piston que les segments du piston.

3. Piston selon la revendication 2,
caractérisé par le fait que la zone de la paroi latérale, présentant une épaisseur réduite, s'étend depuis approximativement la moitié de la hauteur d'un segment de piston, au-dessus du segment de piston supérieur extrême, jusqu'à la région de paroi arrondie.
